# EUROPÄISCHE PATENTSCHRIFT

(11) **EP 2 960 123 B1**
(45) Veröffentlichungstag und Bekanntmachung des Hinweises auf die Patenterteilung: **07.06.2017**
(21) Anmeldenummer: 15001701.0
(22) Anmeldetag: 09.06.2015
(51) Int. Cl.: B60T 8/36, F16K 31/00, H02N 2/04

(54) **BIEGERAHMEN ZUR VERLÄNGERUNG DES STELLWEGS EINES AKTORS FÜR EIN MECHANISCH BETÄTIGTES BAUTEIL**
BENDING FRAME FOR EXTENDING THE REGULATING DISTANCE OF AN ACTUATOR FOR A MECHANICALLY ACTUATED COMPONENT
CADRE DE PLIAGE DESTINÉ À ALLONGER LE PARCOURS DE RÉGLAGE D'UN ACTIONNEUR POUR UN COMPOSANT ACTIONNÉ MÉCANIQUEMENT

(30) Priorität: 24.06.2014 DE 102014009025
(43) Veröffentlichungstag der Anmeldung: 30.12.2015
(73) Patentinhaber: Airbus DS GmbH, 82024 Taufkirchen (DE)
(72) Erfinder: Reith, David, D-70825 Korntal (DE); Kraus, Stephan, D-74229 Oedheim (DE); Maier, Thomas, D-74348 Lauffen (DE)
(74) Vertreter: Frenkel, Matthias Alexander

(56) Entgegenhaltungen:
- DE-A1- 19 643 180
- DE-A1- 19 906 467
- DE-C1- 19 817 320
- DE-C1- 19 854 506

## Beschreibung

Die Erfindung betrifft einen Biegerahmen zur Verlängerung des Stellwegs eines Aktors für ein mechanisch betätigtes Bauteil, insbesondere für ein Proportionalventil zur Treibstoffzufuhr in einem orbitalen Antriebssystem.

Zur mechanischen Betätigung von Bauteilen, wie z.B. Ventilen, werden in der Regel Aktoren verwendet, die elektrische Signale in mechanische Bewegung wandeln und mit dieser Bewegung das Bauteil betätigen. Häufig kommen hierbei Piezoaktoren oder magnetostriktive Aktoren zum Einsatz. Diese weisen den Nachteil auf, dass deren Stellweg zur Betätigung vieler Bauteile oftmals nicht ausreichend ist.

Aus dem Stand der Technik sind Einrichtungen zur Verlängerung des Stellwegs von Aktoren bekannt. In der Druckschrift DE 196 43 180 A1 wird eine piezoaktive Betätigungseinrichtung mit einem mechanischen Bewegungsverstärker beschrieben. Dabei sind die piezoaktiven Elemente der Betätigungseinrichtung von einer Schale mit halbelliptischen Armen umgeben. Die Ausdehnung der piezoaktiven Elemente in Längsrichtung bewirkt eine Auslenkung der halbelliptischen Arme senkrecht zu dieser Längsrichtung.

Bei der Einrichtung zur Bewegungsverstärkung gemäß der DE 196 43 180 A1 erweist es sich als nachteilhaft, dass die Richtung der Vergrößerung des Stellwegs von dem Stellweg des Aktors abweicht und sich hierdurch große Abmessungen für die Einrichtung ergeben.

DE 19854506 C1 offenbart eine druckbeaufschlagbare Fluidkammer, eine durch die Fluidkammer axialverschiebbar geführte Ventilnadel, mittels der eine Mündung verschließbar ist, einen Stellantrieb zur Bewegung der Ventilnadel, ein in die Ventilnadel integriertes Ausgleichselement, das dieses in ein erstes Nadelteil und ein zweites Nadelteil unterteilt, wobei das Ausgleichselement aus einer Hydraulikkammer besteht, welche aus einer an dem ersten Nadelteil angebrachten ersten Wand, einer am zweiten Nadelteil angebrachten zweiten Wand und einer diese verbindende flexible Außenwand begrenzt wird, die Hydraulikkammer eine Durchführung in die Fluidkammer aufweist, so dass eine schnelle Bewegung eines Nadelteils hubverlustfrei auf das andere Nadelteil übertragbar ist, und eine langsame Bewegung eines Nadelteils durch eine Abstandsänderung der ersten Wand und der zweiten Wand ausgleichbar ist.

DE 19817320 C1 offenbart ein Einspritzventil für ein Kraftstoffeinspritzsystem mit einem Injektorgehäuse, in welchem ein Piezostack angeordnet ist, und mit einem mit dem Injektorgehäuse verbundenen Ventilgehäuse, in dem eine mit einer Düsennadel versehene Ventilverschließeinrichtung verschiebbar angeordnet ist. Die Ventilverschließeinrichtung ist durch den Piezostack betätigbar. Durch eine Rückstelleinrichtung ist die Ventilverschließeinrichtung rückstellbar. Zwischen dem Piezostack und der Düsennadel der Ventilverschließeinrichtung ist ein hydraulischer Folgeverstärker mit einem von dem Piezostack betätigten Verdrängerkolben, einem dem Verdrängerkolben nachgeschalteten, den Verstellweg vergrößernden Steuerkolben und einem die Düsennadel betätigenden und die Betätigungskraft erhöhenden Arbeitskolben angeordnet.

DE 19906467 A1 offenbart einen Injektor insbesondere für "Common-Rail"-Dieseleinspritzsysteme von Kraftfahrzeugen mit einem Piezo-Mehrlagenaktor, der einen innerhalb einer Mittellängsbohrung eines Injektorgehäuses sitzenden, durch Vorspannmittel stirnseitig vorgespannten Aktorkörper aufweist. Der Injektor ist dadurch gekennzeichnet, daß die Vorspannmittel wenigstens eine Tellerfeder, die an der einem Injektorventil entgegengesetzten Stirnseite des Aktorkörpers vorspannend angreift und ein in dem Injektorgehäuse sitzendes und darin axial bewegliches Kraftübertragungsglied aufweisen, welches die Federkraft der Tellerfeder(n) zur ventilseitigen Stirnseite des Aktorkörpers überträgt.

Aufgabe der Erfindung ist es deshalb, den Stellweg eines Aktors einfach und effizient durch eine kompakte Einrichtung zu vergrößern.

Diese Aufgabe wird durch den Biegerahmen gemäß Patentanspruch 1 gelöst. Weiterbildungen der Erfindung sind in den abhängigen Ansprüche definiert.

Der erfindungsgemäße Biegerahmen dient zur Verlängerung des Stellwegs eines Aktors für ein mechanisch betätigtes Bauteil. In der Regel ist dabei der Aktor Bestandteil des Bauteils. Unter Aktor ist hier und im Folgenden ein Wandler zu verstehen, der elektrische Signale in eine mechanische Bewegung umsetzt. Vorzugsweise ist der Aktor ein Piezoaktor bzw. ggf. auch ein magnetostriktiver Aktor. Der Biegerahmen ist prinzipiell für beliebige mechanisch betätigte Bauteile einsetzbar, vorzugsweise wird er jedoch für ein Ventil verwendet. Das Ventil ist insbesondere ein Proportionalventil und/oder ein Treibstoffventil. In einer Variante ist das Ventil ein Proportionalventil zur Treibstoffzufuhr und insbesondere ein Proportionalventil zur Treibstoffzufuhr in einem orbitalen Antriebsystem, d.h. in einem Raketenantrieb.

Der erfindungsgemäße Biegerahmen umfasst eine Mehrzahl von verbiegbaren Längsstreben, die um eine Längsachse angeordnet sind, auf welcher der Stellweg des Aktors verläuft. Die Längsstreben erstrecken sich jeweils in Richtung der Längsachse, wobei eine durch den Aktor bewirkte Kraftausübung entlang des Stellwegs auf die Längsstreben deren Verbiegen in eine Richtung senkrecht zur Längsachse bewirkt. Aus den Längsstreben erstrecken sich jeweilige Querstreben hin zu der Längsachse, d.h. für jede Längsstrebe ist eine Querstrebe vorgesehen, die sich aus dieser Längsstrebe erstreckt. Ein erstes Ende einer jeweiligen Querstrebe ist an einer jeweiligen Längsstrebe angelenkt und ein zum ersten Ende entgegengesetztes zweites Ende der jeweiligen Querstrebe ist dazu vorgesehen, Kraft auf das mechanisch betätigte Bauteil in Richtung der Längsachse zu dessen Betätigung zu übertragen. In dem erfindungsgemäßen Biegerahmen wechselwirken die Längsstreben und Querstreben derart miteinander, dass das Verbiegen der Längsstreben ein Verschieden der zweiten Enden der Querstreben in Richtung der Längsachse aufgrund der Anlenkung der ersten Enden der Querstreben an den Längsstreben bewirkt, wodurch der Stellweg zur mechanischen Betätigung des Bauteils verlängert wird.

Der erfindungsgemäße Biegerahmen weist den Vorteil auf, dass über die verbiegbaren Längsstreben und die daran angelenkten Querstreben eine doppelte Hebelumlenkung erreicht wird, so dass der Stellweg des Aktors in Richtung der Längsachse vergrößert wird und durch den Biegerahmen eine kompakte Einrichtung zur Bewegungsverstärkung geschaffen wird.

Erfindungsgemäß umfassen die Längsstreben des Biegerahmens jeweils zwei Teilstreben, die an einer Verbindungsstelle aneinander angelenkt sind. Eine besonders einfache Anlenkung wird in einer Variante der Erfindung dadurch erreicht, dass die zwei Teilstreben an der Verbindungsstelle über ein Filmscharnier aneinander angelenkt sind. Vorzugsweise sind die beiden Teilstreben gleich lang. Insbesondere wenn durch den Aktor eine Druckausübung auf den Biegerahmen erfolgt, sind die Teilstreben in einer bevorzugten Variante versteift, um deren Knicken zu verhindern.

Erfindungsgemäß ist die sich aus einer jeweiligen Längsstrebe erstreckende Querstrebe mit ihrem ersten Ende an der jeweiligen Längsstrebe an der Position der Verbindungsstelle angelenkt. Das Filmscharnier ist dabei vorzugsweise das Filmscharnier, über das ggf. auch die zwei Teilstreben der jeweiligen Längsstrebe miteinander verbunden sind.

In einer weiteren bevorzugten Ausführungsform sind die Querstreben an ihren zweiten Enden über einen gemeinsamen Halteabschnitt miteinander verbunden, wobei über die Verschiebung des Halteabschnitts die mechanische Betätigung des Bauteils erfolgt. Hierdurch wird ein guter Kraftübertrag zum mechanisch betätigten Bauteil erreicht.

In einer weiteren bevorzugten Variante des erfindungsgemäßen Biegerahmens weisen gesehen in Richtung der Längsachse alle Längsstreben den gleichen Abstand von der Längsachse auf und die von der Längsachse aus gemessenen Winkel zwischen benachbarten Längsstreben sind gleich groß. Aufgrund des Aufbaus des Biegerahmens korrespondieren diese Winkel mit den Winkeln zwischen benachbarten Querstreben. Es wird somit eine rotationssymmetrische Struktur des Biegerahmens geschaffen. Ein solcher Biegerahmen eignet sich insbesondere zur Verstellung von zylinderförmigen mechanisch betätigten Bauteilen.

In einer weiteren Variante sind die Längsstreben an einem ihrer Enden über einen im Wesentlichen senkrecht zur Längsrichtung verlaufenden Querträger miteinander verbunden, wobei die Längsstreben vorzugsweise auch an dem anderen ihrer Enden über einen im Wesentlichen senkrecht zur Längsrichtung verlaufenden (anderen) Querträger miteinander verbunden sind. Hierdurch kann eine sehr gute Krafteinleitung in den Biegerahmen über diese Querträger erreicht werden. Vorzugsweise ist ein jeweiliger Querträger ein sich senkrecht zur Längsachse erstreckender Ring, der die Längsachse umläuft, wobei der Mittelpunkt des Rings vorzugsweise auf der Längsachse liegt.

Je nach Ausgestaltung des Biegerahmens kann die Anzahl der Längsstreben unterschiedlich gewählt werden. Es müssen jedoch zumindest zwei Längsstreben vorhanden sein. In einer besonders bevorzugten Ausführungsform umfasst der Biegerahmen vier oder mehr Längsstreben.

In einer weiteren Variante ist der Biegerahmen derart ausgestaltet, dass sich die Längsstreben bei einer durch den Aktor bewirkten Kraftausübung entlang des Stellwegs hin zur Längsachse verbiegen. Gegebenenfalls besteht auch die Möglichkeit, dass die Verbiegung von der Längsachse weg erfolgt.

Der erfindungsgemäße Biegerahmen ist in einer bevorzugten Variante ein einstückiges Bauteil, welches mit einem geeigneten Herstellungsverfahren auf einfache Weise gefertigt werden kann. Vorzugsweise besteht der Biegerahmen aus Metall oder Kunststoff.

In einer weiteren Variante ist der Biegerahmen derart ausgestaltet, dass über eine Druckausübung des Aktors auf den Biegerahmen eine Verlängerung des Stellwegs erfolgt. Nichtsdestotrotz kann der Biegerahmen auch derart ausgestaltet sein, dass über eine Zugausübung des Aktors auf den Biegerahmen eine Verlängerung des Stellwegs erfolgt.

Wie bereits oben erwähnt, kann der Biegerahmen für verschiedene Arten von Aktoren zur Verlängerung des Stellwegs vorgesehen sein. Vorzugsweise ist der Aktor dabei ein Piezoaktor, insbesondere ein Piezo-Ringaktor, oder ein magnetostriktiver Aktor.

Neben dem oben beschriebenen Biegerahmen betrifft die Erfindung ferner ein mechanisch betätigtes Bauteil, das einen Aktor und den erfindungsgemäßen Biegerahmen bzw. eine oder mehrere bevorzugte Varianten des erfindungsgemäßen Biegerahmens umfasst. Der Biegerahmen verlängert dabei den Stellweg des Aktors zur Betätigung des mechanisch betätigten Bauteils.

Ausführungsbeispiele der Erfindung werden nachfolgend anhand der beigefügten Figuren detailliert beschrieben.

Es zeigen:
- Fig. 1: eine perspektivische Darstellung einer Ausführungsform eines erfindungsgemäßen Biegerahmens;
- Fig. 2: eine Schnittdarstellung eines Proportionalventils, das den Biegerahmen aus Fig. 1 umfasst, in geschlossener Stellung des Ventils;
- Fig. 3: eine Schnittdarstellung des Ventils aus Fig. 2 in geöffneter Stellung.

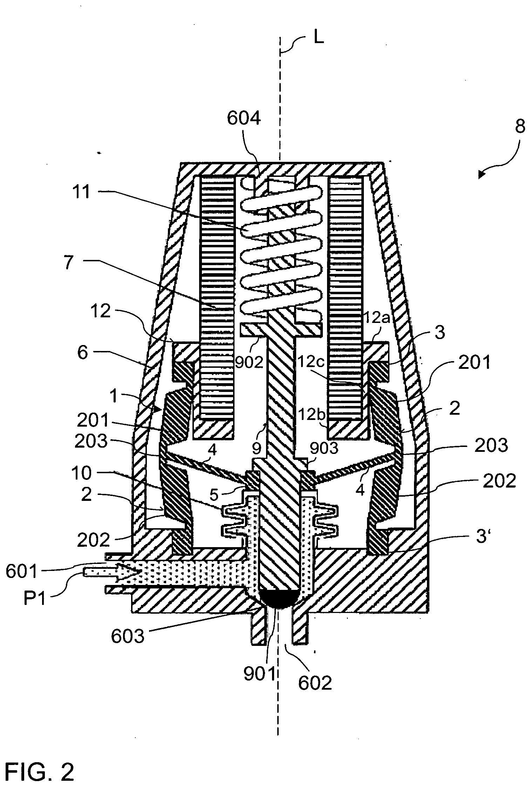

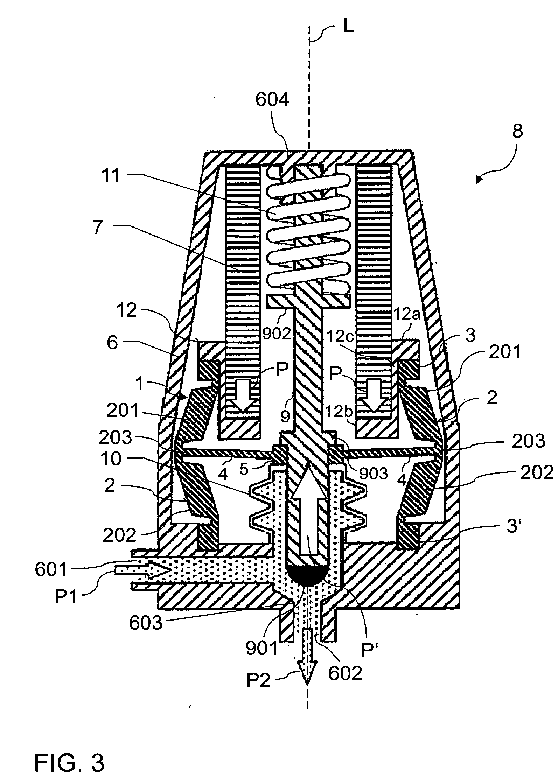

Nachfolgend wird ein Ausführungsbeispiel der Erfindung anhand eines Biegerahmens beschrieben, der zur Verlängerung des Stellwegs eines Piezo-Ringaktors vorgesehen ist, wie sich aus den weiter unten beschriebenen Fig. 2 und 3 ergibt. Der Piezoaktor dient dabei zur Betätigung eines Proportionalventils, das zur Zufuhr von Treibstoff für einen Raketenantrieb vorgesehen ist. Gegebenenfalls kann der Biegerahmen auch zur Verlängerung des Stellwegs anderer Aktoren, wie z.B. magnetostriktiver Aktoren, verwendet werden.

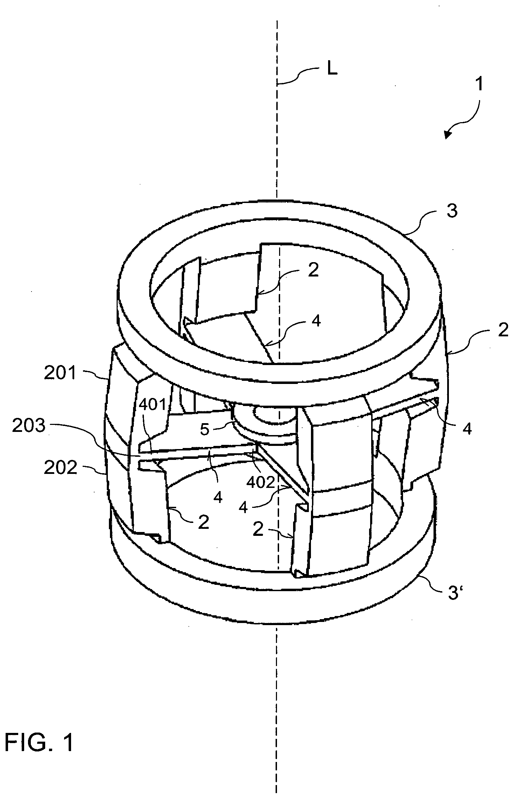

Fig. 1 zeigt eine perspektivische Darstellung des Biegerahmens 1, der ein einstückiges Bauteil ist, das insbesondere aus Metall oder Kunststoff besteht. Der Biegerahmen ist rotationssymmetrisch in Bezug auf eine Längsachse L, entlang der auch der Stellweg des Aktors liegt, der durch den Biegerahmen verlängert wird. Der Biegerahmen 1 umfasst vier Längsstreben 2, die in Winkeln von 90° benachbart zueinander um die Längsachse L angeordnet sind und sich in Richtung der Längsachse erstrecken. Die vier Längsstreben werden dabei an ihren gegenüberliegenden Enden zwischen einem oberen Ring 3 und einem unterem Ring 3' gehalten. Die Längsstreben umfassen jeweils eine obere Teilstrebe 201 und eine untere Teilstrebe 202, die über eine dazwischen liegende Verbindungsstelle mit verringerter Dicke in der Form eines Filmscharniers 203 miteinander verbunden sind. Aus Übersichtlichkeitsgründen sind die Bezugszeichen 201 bis 203 nur bei einer Strebe in Fig. 1 wiedergegeben.

Aus jeder der Längsstreben 2 erstreckt sich eine Querstrebe 4 hin zu der Längsachse L. Dabei ist ein erstes Ende 401 jeder Querstrebe 4 an dem Filmscharnier 203 einer Längsstrebe 2 befestigt und somit an der Längsstrebe angelenkt. Demgegenüber führen die zum ersten Ende entgegengesetzten Enden 402 der jeweiligen Querstreben 4 zu einem gemeinsamen Halteabschnitt 5, der bei Kraftausübung des entsprechenden Piezoaktors auf den Biegerahmen ein Proportionalventil betätigt. Aus Übersichtlichkeitsgründen sind die Bezugszeichen 401 und 402 nur für eine der Querstreben in Fig. 1 dargestellt.

Eine Druckausübung von oben in Richtung der Längsachse L auf den Biegerahmen 1, die durch den Piezoaktor bewirkt wird, führt dazu, dass eine Biegung der Längsstreben an den Filmscharnieren erfolgt. Diese Biegung führt wiederum zu einer Bewegung der Querstreben 4 und damit des Halteabschnitts 5, wobei diese Bewegung zur Betätigung des entsprechenden Proportionalventils führt. Der Stellweg aufgrund der Bewegung des Halteabschnitts 5 ist länger als der Stellweg des Piezoaktors, wie im Folgenden anhand von Fig. 2 und Fig. 3 erläutert wird.

Fig. 2 zeigt in Schnittansicht ein Proportionalventil 8, das mit Hilfe des Biegerahmens aus Fig. 1 über einen Piezo-Ringaktor 7 betätigt wird. Die Bauteile des Ventils sind dabei in einem Gehäuse 6 angeordnet. Über das Ventil wird die Zufuhr von Raketentreibstoff geregelt, wobei hierfür in dem Gehäuse 6 ein horizontal verlaufender Treibstoffeinlass 601 und ein vertikal verlaufender Treibstoffauslass 602 vorgesehen ist. Der mit Treibstoff gefüllte Bereich im Ventil ist gepunktet dargestellt. Der Fluss des Treibstoffs in den Einlass ist durch den Pfeil P1 angedeutet. Das Ventil ist in Fig. 2 in seiner geschlossenen Stellung wiedergegeben, so dass aus dem Auslass 602 kein Treibstoff austritt. Zur Steuerung des Treibstoffflusses ist eine Ventilstange 9 mit einer Ventilspitze 901 vorgesehen, die in der geschlossenen Stellung der Fig. 2 an einem Ventilsitz 603 benachbart zum Auslass 602 anliegt. Durch Bewegung der Stange 9 in vertikaler Richtung nach oben wird die Spitze 901 vom Ventilsitz 603 angehoben und je nach Abstand der Spitze vom Ventilsitz wird hierüber die Menge an ausgelassenem Treibstoff geregelt. Die Betätigung des Ventils erfolgt somit über die Bewegung der Ventilstange 9 entlang der Längsachse L, die mit der Längsachse aus Fig. 1 korrespondiert.

Am unteren Ende der Ventilstange 9 befindet sich ferner ein metallischer Faltenbalg 10, der sich bei der Bewegung der Stange nach oben ausdehnt und verhindert, dass Treibstoff in das Innere des Gehäuses 6 fließt. In der geschlossen Stellung der Fig. 2 wird die Ventilspitze 901 über die Kraft einer Schraubenfeder 11 am Ventilsitz 603 gehalten. Die Schraubenfeder ist dabei zwischen einem kreisförmigen Vorsprung 902 der Stange 9 und dem oberen Ende des Gehäuses 6 gehalten. Am oberen Ende des Gehäuses befindet sich ferner eine kreisförmige Aufnahme 604, in der das obere Ende der Ventilstange geführt wird. Die Betätigung der Ventilstange 9 zum Öffnen des Ventils erfolgt mit Hilfe des Piezo-Ringaktors 7, der im oberen Teil des Ventils innerhalb des Gehäuses 6 angeordnet ist. Der Piezoaktor 7 ist dabei über ein zylindrisches Element 12 mit dem Biegerahmen 1 in Wirkverbindung, der in dem Gehäuse 6 eingesetzt ist und dessen unterer Ring 3' auf einer Innenseite des Gehäuses 6 aufliegt. Dabei ist der Schnitt des Biegerahmens entlang von zwei gegenüber liegende Längsstreben 2 wiedergegeben. Das zylindrische Element 12 umfasst einen oberen Ringabschnitt 12a und einen unteren Ringabschnitt 12b, zwischen denen sich ein schmaler Zylinderabschnitt 12c erstreckt. Die Unterseite des oberen Ringabschnitts 12a liegt dabei auf der Oberseite des Rings 3 des Biegerahmens 1 auf. Demgegenüber liegt die Unterseite des Piezo-Ringaktors 7 auf der Oberseite des unteren Ringabschnitts 12b auf.

Die Querstreben 4 des Biegerahmens 1 erstrecken sich in der Einbauposition der Fig. 2 vom Filmscharnier 203 schräg nach unten. Der an den Enden der Querstreben ausgebildete ringförmige Halteabschnitt 5 ist zwischen einem ringförmigen Vorsprung 903 der Ventilstange 9 und der Oberseite des Faltenbalgs 10 angeordnet. In der Ventilstellung der Fig. 2 ist der Piezoaktor 7 nicht betätigt, d.h. er übt keine Kraft über das zylindrische Element 12 auf den Ring 3 und damit den Biegerahmen 1 aus. Zum Öffnen des Ventils wird der Piezoaktor über ein elektrisches Steuersignal verstellt, was zur Erzeugung einer Druckkraft nach unten in Richtung der Längsachse L führt, wie aus der nachfolgend beschriebenen Fig. 3 ersichtlich ist.

Fig. 3 zeigt das gleiche Ventil wie Fig. 2, jedoch ist das Ventil nunmehr in geöffneter Stellung. Um dies zu erreichen, dehnt sich der Piezoaktor basierend auf einem elektrischen Signal nach unten aus, was durch die Pfeile P angedeutet ist. Mittels des zylinderförmigen Elements 12 wird hierdurch eine Druckausübung auf den oberen Rand 3 des Biegerahmens 1 erreicht, welche wiederum dazu führt, dass sich die Teilstreben 201 und 202 an den Filmscharnieren 203 nach außen bewegen und sich hierdurch die Längsstrebe 2 verbiegt. Um ein Abknicken der einzelnen Teilstreben 201 und 202 bei dieser Kraftausübung zu vermeiden, sind die Teilstreben geeignet versteift. Die Bewegung der Teilstreben nach außen führt aufgrund der flexiblen Befestigung bzw. Anlenkung der Querstreben 4 an dem Filmscharnier 203 zu einer Bewegung des Halteabschnitts 5 nach oben.

Aufgrund der Bewegung des Halteabschnitts 5 nach oben wird auch die Bewegung der Ventilstange 9 nach oben bewirkt, wie durch den Pfeil P' angedeutet ist. Hierdurch löst sich die Ventilspitze 901 von dem Ventilsitz 603 und der metallische Faltenbalg 10 dehnt sich aus. Als Ergebnis wird der Auslass 602 geöffnet und Treibstoff kann hierüber ausfließen, wie durch den Pfeil P2 angedeutet ist. Durch den rotationssymmetrischen Biegerahmen 1 wird dabei erreicht, dass der über die Bewegung des Halteabschnitts 5 erzeugte Ventilhub wesentlich größer als der originäre Hub des Piezoaktors 7 ist. Mit anderen Worten wird der Stellweg des Piezoaktors mit Hilfe des Biegerahmens vervielfacht. Gleichzeitig liegen die Eingangsbewegung des Piezoaktors 7 und die Ausgangsbewegung der Ventilstange 9 auf der gleichen Achse, so dass auf einfache Weise die dargestellte Betätigung des zylinderförmigen Treibstoffregelventils erreicht wird.

Die im Vorangegangenen beschriebene Ausführungsform der Erfindung weist eine Reihe von Vorteilen auf. Der Stellweg eines Aktors, wie z.B. eines Piezoaktors oder ggf. auch eines anderen Aktors, kann auf einfache Weise vervielfacht werden. Dabei liegt die Stellrichtung in der Längsachse des Aktors, was eine kompakte Unterbringung in dem mechanisch zu betätigenden Bauteil und insbesondere in einem Ventil ermöglicht. Mit dem erfindungsgemäßen Biegerahmen können somit Aktoren, die eine große Kraft mit nur kleinem Hub realisieren, auch in mechanisch betätigten Bauteilen eingesetzt werden, welche einen großen Stellweg benötigen. Würde statt der Verwendung des erfindungsgemäßen Biegerahmens die Aktorlänge vergrößert werden, würde dies zu einer größeren Masse ind zu mehr Bauraum/Volumen führen. Ferner wären die elektrische Leistung und die Kosten für den Aktor wesentlich höher. Der erfindungsgemäße Biegerahmen ermöglicht somit eine kostengünstige und kompakte Realisierung eines mechanisch betätigten Bauteils.

### Bezugszeichenliste

- 1: Biegerahmen
- 2: Längsstrebe
- 201, 202: Teilstreben
- 203: Filmscharnier
- 3, 3': Ring
- 4: Querstrebe
- 401: erstes Ende der Querstrebe
- 402: zweites Ende der Querstrebe
- 5: Halteabschnitt
- 6: Gehäuse
- 601: Einlass
- 602: Auslass
- 603: Ventilsitz
- 604: Aufnahme
- 7: Piezo-Ringaktor
- 8: Proportionalventil
- 9: Ventilstange
- 901: Ventilspitze
- 902, 903: ringförmige Vorsprünge
- 10: Faltenbalg
- 11: Schraubenfeder
- 12: zylinderförmiges Element
- 12a: oberer Ringabschnitt des zylinderförmigen Elements
- 12b: unterer Ringabschnitt des zylinderförmigen Elements
- 12c: Zylinderabschnitt des zylinderförmigen Elements
- P1, P2: Strömungsrichtungen des Treibstoffs
- P, P': Bewegungsrichtungen des Aktors bzw. des Ventils
- L: Längsachse

## Patentansprüche

1. Biegerahmen zur Verlängerung des Stellwegs eines Aktors (7) für ein mechanisch betätigtes Proportionalventil (9) zur Treibstoffzufuhr in einem orbitalen Antriebssystem,
- wobei der Biegerahmen (1) eine Mehrzahl von verbiegbaren Längsstreben (2) umfasst, die um eine Längsachse (L) angeordnet sind, auf welcher der Stellweg des Aktors (7) verläuft;
- wobei sich die Längsstreben (2) jeweils in Richtung der Längsachse (L) erstrecken und eine durch den Aktor (7) bewirkte Kraftausübung entlang des Stellwegs auf die Längsstreben (2) deren Verbiegen in eine Richtung senkrecht zur Längsachse (L) bewirkt;
- wobei sich aus den Längsstreben (2) jeweilige Querstreben (4) hin zu der Längsachse (L) erstrecken, wobei ein erstes Ende (401) einer jeweiligen Querstrebe (4) an einer jeweiligen Längsstrebe (2) angelenkt ist und ein zum ersten Ende (401) entgegengesetztes zweites Ende (402) der jeweiligen Querstrebe (4) zur Kraftübertragung auf das Ventil (9) in Richtung der Längsachse (L) zu dessen Betätigung vorgesehen ist;
- wobei die Längsstreben (2) und Querstreben (4) derart miteinander wechselwirken, dass das Verbiegen der Längsstreben (2) ein Verschieben der zweiten Enden (402) der Querstreben (4) in Richtung der Längsachse (L) bewirkt und hierdurch der Stellweg zur mechanischen Betätigung des Ventils (9) verlängert wird;
**dadurch gekennzeichnet, dass** die Längsstreben (2) jeweils zwei Teilstreben (201, 202) umfassen, die an einer Verbindungsstelle aneinander angelenkt sind; und dass die sich aus einer jeweiligen Längsstrebe (2) erstreckende Querstrebe (4) mit ihrem ersten Ende (401) an der jeweiligen Längsstrebe (2) an der Position der Verbindungsstelle angelenkt ist.

2. Biegerahmen nach Anspruch 1, **dadurch gekennzeichnet, dass** die zwei Teilstreben (201, 202) an der Verbindungsstelle über ein Filmscharnier (203) aneinander angelenkt sind.

3. Biegerahmen nach einem der vorhergehenden Ansprüche, **dadurch gekennzeichnet, dass** die Querstreben (4) an ihren zweiten Enden (402) über einen gemeinsamen Halteabschnitt (5) miteinander verbunden sind, wobei über die Verschiebung des Halteabschnitts (5) die mechanische Betätigung des Ventils (9) erfolgt.

4. Biegerahmen nach einem der vorhergehenden Ansprüche, **dadurch gekennzeichnet, dass** gesehen in Richtung der Längsachse (L) alle Längsstreben (2) den gleichen Abstand von der Längsachse (L) aufweisen und die von der Längsachse (L) aus gemessenen Winkel zwischen benachbarten Längsstreben (2) gleich groß sind.

5. Biegerahmen nach einem der vorhergehenden Ansprüche, **dadurch gekennzeichnet, dass** die Längsstreben (2) an einem ihrer Enden über einen im Wesentlichen senkrecht zur Längsrichtung (L) verlaufenden Querträger (3) miteinander verbunden sind, wobei die Längsstreben (2) vorzugsweise auch an dem anderen ihrer Enden über einen im Wesentlichen senkrecht zur Längsrichtung (L) verlaufenden Querträger (3') miteinander verbunden sind.

6. Biegerahmen nach Anspruch 5, **dadurch gekennzeichnet, dass** ein jeweiliger Querträger (3, 3') ein sich senkrecht zur Längsachse (L) erstreckender Ring ist, der die Längsachse (L) umläuft, wobei der Mittelpunkt des Rings vorzugsweise auf der Längsachse (L) liegt.

7. Biegerahmen nach einem der vorhergehenden Ansprüche, **dadurch gekennzeichnet, dass** der Biegerahmen (1) vier oder mehr Längsstreben (2) umfasst.

8. Biegerahmen nach einem der vorhergehenden Ansprüche, **dadurch gekennzeichnet, dass** der Biegerahmen (1) derart ausgestaltet ist, dass sich die Längsstreben (2) bei einer durch den Aktor (7) bewirkten Kraftausübung entlang des Stellwegs hin zur Längsachse (L) oder weg von der Längsachse (L) verbiegen.

9. Biegerahmen nach einem der vorhergehenden Ansprüche, **dadurch gekennzeichnet, dass** der Biegerahmen (1) ein einstückiges Bauteil ist.

10. Biegerahmen nach einem der vorhergehenden Ansprüche, **dadurch gekennzeichnet, dass** der Biegerahmen (1) derart ausgestaltet ist, dass über eine Druckausübung des Aktors (7) auf den Biegerahmen (1) oder eine Zugausübung des Aktors (7) auf den Biegerahmen (1) eine Verlängerung des Stellwegs erfolgt.

11. Biegerahmen nach einem der vorhergehenden Ansprüche, **dadurch gekennzeichnet, dass** der Biegerahmen (1) zur Verlängerung des Stellwegs eines Piezoaktors, insbesondere eines Piezo-Ringaktors, oder eines magnetostriktiven Aktors vorgesehen ist.

12. Mechanisch betätigtes Bauteil, umfassend einen Aktor (7) und einen Biegerahmen (1) nach einem der vorhergehenden Ansprüche, der den Stellweg des Aktors (7) zur Betätigung des Ventils (9) verlängert.

## Claims

1. A bending frame for extending travel of an actuator for a mechanically actuated proportional valve (9) for fuel supply in an orbital propulsion system,
- wherein the bending frame (1) comprises a plurality of bendable longitudinal struts (2), which are arranged around a longitudinal axis (L) on which the travel of the actuator (7) runs;
- wherein the longitudinal struts (2) each extend in a direction of the longitudinal axis (L), and an application of force enacted by the actuator (7) along the travel on the longitudinal struts (2) causes their bending in a direction perpendicular to the longitudinal axis (L);
- wherein respective cross struts (4) extend out to the longitudinal axis (L) from each of the longitudinal struts (2), wherein a first end (401) of a respective cross strut (4) is articulated to a respective longitudinal strut (2), and a second end (402) of the respective cross strut (4) opposite to the first end (401) is provided in order to transmit force to the value (9) in the direction of the longitudinal axis (L) for the purpose of actuation thereof;
- wherein the longitudinal struts (2) and the cross struts (4) interact with one another in such a way that the bending of the longitudinal struts (2) causes the second ends (402) of the cross struts (4) to be displaced in the direction of the longitudinal axis (L), thereby extending the travel for mechanically actuating the valve (9);
**characterized in that** the longitudinal struts (2) each comprise two substruts (201, 202) which are articulated to one another at a connection point; and that the cross strut (4) extending out from a respective longitudinal strut (2) is articulated with its first end (401) at the respective longitudinal strut (2) to the position of the connection point.

2. The bending frame according to claim 1, **characterized in that** the two substruts (201, 202) are articulated to one another at the connecting point via a film hinge (203).

3. The bending frame according to one of the preceding claims, **characterized in that** the cross struts (4) are interconnected at the second ends (402) thereof via a shared holding section (5), wherein the valve (9) is mechanically actuated via displacement of the holding section (5).

4. The bending frame according to one of the preceding claims, **characterized in that**, as seen in the direction of the longitudinal axis (L), all of the longitudinal struts (2) have the same distance from the longitudinal axis (L), and the angles between adjacent longitudinal struts (2) as measured from the longitudinal axis (L) are of equal magnitude.

5. The bending frame according to one of the preceding claims, **characterized in that** the longitudinal struts (2) are connected to one another at one of the ends thereof via a cross member (3) running substantially perpendicularly to the longitudinal direction (L), wherein the longitudinal struts (2) are also preferably connected to one another at the other ends thereof via a cross member (3') running substantially perpendicularly to the longitudinal direction (L).

6. The bending frame according to claim 5, **characterized in that** a respective cross member (3, 3') is a ring which extends perpendicularly to the longitudinal axis (L) and encircles the longitudinal axis (L), wherein the center point of the ring preferably lies on the longitudinal axis (L).

7. The bending frame according to one of the preceding claims, **characterized in that** the bending frame (1) comprises four or more longitudinal struts (2).

8. The bending frame according to claim 1, **characterized in that** the bending frame (1) is configured such that the longitudinal struts (2) bend towards the longitudinal axis (L) or away from the longitudinal axis (L) along the travel, when the force is applied by the actuator (7).

9. The bending frame according to one of the preceding claims, **characterized in that** the bending frame (1) is an integrally-formed component.

10. The bending frame according to one of the preceding claims, **characterized in that** the bending frame (1) is configured so that the travel is extended via application of pressure by the actuator (7) onto the bending frame (1) or via application of traction by the actuator (7) onto the bending frame (1).

11. The bending frame according to one of the preceding claims, **characterized in that** the bending frame (1) is provided in order to extend the the travel of a piezoelectric actuator, in particular a piezoelectric ring actuator, or a magnetostrictive actuator.

12. Mechanically actuated component, comprising an actuator (7) and a bending frame (1) according to one of the preceding claims, which extends the travel of the actuator (7) in order to actuate the valve (9).

## Revendications

1. Cadre déformable servant à allonger la course à parcourir par un actionneur (7) destiné à une soupape proportionnelle (9) actionnée mécaniquement pour l'amenée de carburant dans un système de propulsion orbital,
- le cadre déformable (1) comprenant une pluralité de montants (2) disposés autour d'un axe longitudinal (L) par lequel passe la course parcourue par l'actionneur (7),
- les montants (2) s'étendant chacun dans la direction de l'axe longitudinal (L), et une force exercée par l'actionneur (7) le long de ladite course sur les montants (2) ayant pour effet de les faire se déformer dans une direction perpendiculaire à l'axe longitudinal (L),
- des entretoises (4) s'étendant respectivement à partir des montants (2) vers l'axe longitudinal (L), une première extrémité (401) d'une entretoise (4) étant articulée sur un montant (2) correspondant, et une deuxième extrémité (402) de cette entretoise (4), opposée à la première extrémité (401), étant prévue pour transmettre, dans la direction de l'axe longitudinal (L), une force agissant sur la soupape (9) en vue de son actionnement,
- les montants (2) et les entretoises (4) interagissant les uns avec les autres de telle manière que la déformation des montants (2) a pour effet de faire se déplacer les deuxièmes extrémités (402) des entretoises (4) dans la direction de l'axe longitudinal (L), ce qui allonge la course à parcourir pour l'actionnement mécanique de la soupape (9),
**caractérisé en ce que** les montants (2) comprennent chacun deux parties de montant (201, 202) articulées l'une à l'autre en un point de jonction, et **en ce que** l'entretoise (4), qui s'étend à partir d'un montant (2) correspondant, est articulée par l'intermédiaire de sa première extrémité (401) sur le montant (2) correspondant, à l'endroit où se trouve le point de jonction.

2. Cadre déformable selon la revendication 1, **caractérisé en ce que** les deux parties de montant (201, 202) sont articulées l'une à l'autre, au point de jonction, par l'intermédiaire d'un film charnière (203).

3. Cadre déformable selon l'une des revendications précédentes, **caractérisé en ce que** les entretoises (4) sont reliées les unes aux autres à leur deuxième extrémité (402) par un segment de maintien (5) commun, la soupape (9) étant mécaniquement actionnée par le déplacement dudit segment de maintien (5).

4. Cadre déformable selon l'une des revendications précédentes, **caractérisé en ce que** vus dans la direction de l'axe longitudinal (L), les montants (2) sont tous à la même distance de l'axe longitudinal (L), et de grandeur égale les angles mesurés à partir de l'axe longitudinal (L), entre montants (2) voisins.

5. Cadre déformable selon l'une des revendications précédentes, **caractérisé en ce que** les montants (2) sont reliés les uns aux autres à une de leurs extrémités par une traverse (3) s'étendant pour l'essentiel perpendiculairement à l'axe longitudinal (L), les montants (2) étant préférentiellement également reliés à leur autre extrémité par une traverse (3') s'étendant pour l'essentiel perpendiculairement à la direction longitudinale (L).

6. Cadre déformable selon la revendication 5, **caractérisé en ce que** chaque traverse (3, 3') consiste en un anneau qui s'étend perpendiculairement à l'axe longitudinal (L) et qui tourne autour de ce dernier, le centre de l'anneau étant préférentiellement placé sur l'axe longitudinal (L).

7. Cadre déformable selon l'une des revendications précédentes, **caractérisé en ce que** le cadre déformable (1) comprend quatre montants (2) ou plus.

8. Cadre déformable selon l'une des revendications précédentes, **caractérisé en ce que** le cadre déformable (1) est conçu de telle manière que les montants (2) se déforment en se rapprochant de l'axe longitudinal (L), ou en s'en éloignant, sous l'effet d'une force exercée par l'actionneur (7), le long de la course de ce dernier.

9. Cadre déformable selon l'une des revendications précédentes, **caractérisé en ce que** le cadre déformable (1) est une pièce monobloc.

10. Cadre déformable selon l'une des revendications précédentes, **caractérisé en ce que** le cadre déformable (1) est conçu de telle manière qu'une pression exercée par l'actionneur sur le cadre déformable (1) ou une traction exercée par l'actionneur (7) sur le cadre déformable (1) entraîne l'allongement de la course à parcourir.

11. Cadre déformable selon l'une des revendications précédentes, **caractérisé en ce que** le cadre déformable (1) sert à allonger la course à parcourir par un actionneur piézo-électrique, plus particulièrement un actionneur piézo-électrique annulaire ou un actionneur magnétostrictif.

12. Pièce actionnée mécaniquement, comprenant un actionneur (7) et un cadre déformable (1) selon l'une des revendications précédentes, lequel cadre allonge la course à parcourir par l'actionneur (7) pour l'actionnement de la soupape (9).
